# EUROPEAN PATENT SPECIFICATION

(11) **EP 1 653 479 B1**
(45) Date of publication and mention of the grant of the patent: **26.06.2013**
(21) Application number: 05256363.2
(22) Date of filing: 13.10.2005
(51) Int. Cl.: G21C 15/18, G21C 9/012

(54) **Trash rack arrangement for drywell connecting vents**
In einem Luftbereich mit angeschlossenen Dampfausströmvorrichtungen angeordnete Rechenvorrichtung
Dispositif de rétention de débris pour fosse sèche raccordée à des conduites d'échappement de vapeur

(30) Priority: 28.10.2004 US 975008
(43) Date of publication of application: 03.05.2006
(73) Proprietor: GENERAL ELECTRIC COMPANY, Schenectady, NY 12345 (US)
(72) Inventor: Moen, Stephan C., Oswego, New York 13126 (US); Liu, Ai-shen, Fremont, California 94539 (US)
(74) Representative: Cleary, Fidelma

(56) References cited:
- EP-A- 0 390 486
- US-A- 3 992 256
- US-A- 4 243 485
- US-A- 5 011 652
- PATENT ABSTRACTS OF JAPAN vol. 017, no. 399 (P-1579), 26 July 1993 (1993-07-26) & JP 05 072372 A (TOSHIBA CORP), 26 March 1993 (1993-03-26)

## Description

The present invention relates generally to a trash rack arrangement, and more particularly to a trash rack arrangement including a continuous cage.

A boiling water reactor (BWR) is a reactor in which water, used as both coolant and moderator, is allowed to boil in the reactor vessel. The BWR may include a plurality of drywell inlets (i.e., vents). The drywell inlets lead to a suppression pool. The BWR may include a plurality of drywell connecting vents (DCVs). The DCVs may connect the suppression pool to the drywell inlets, which in turn lead to other elements of the BWR, for example the reactor core. The reactor vessel is contained inside the drywell. The DCVs connect the drywell space to the suppression pool. In the event of a rupture or leak of the reactor vessel boundary, the escaping fluid would be contained in the drywell and flow through the DCVs to the suppression pool, where it is cooled and retained. Thus, the high energy-high volume steam may be reduced to a much smaller volume of water at much lower temperatures.

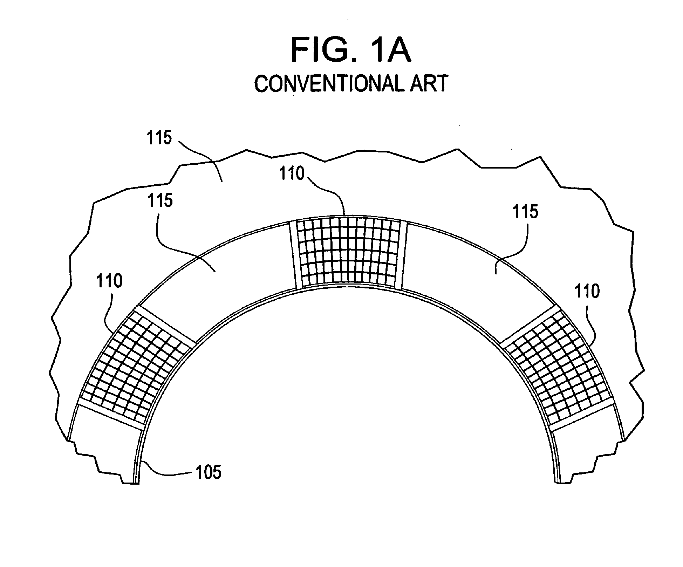

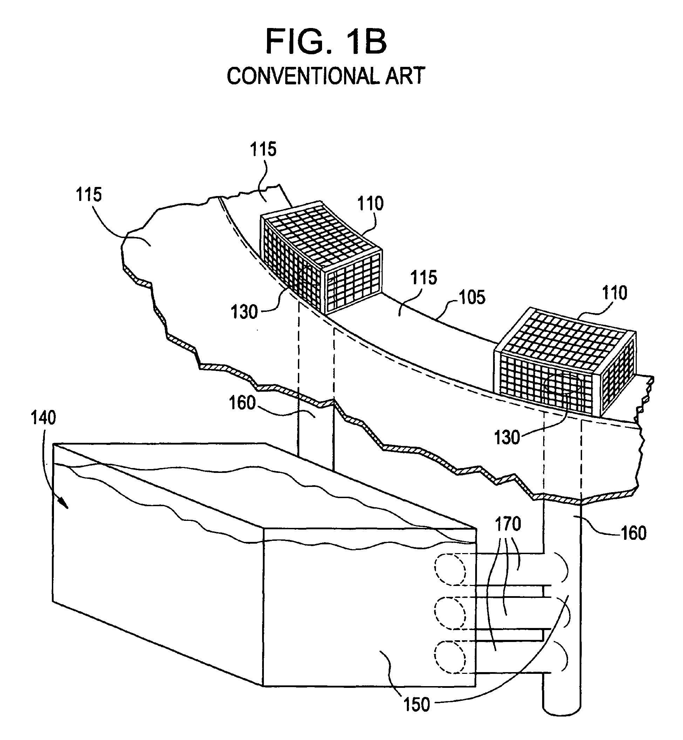

Figures 1A and 1 B illustrate a top view and a perspective view, respectively, of a conventional trash rack arrangement in a BWR. Referring to Figures 1A and 1 B, the trash racks 110 may be operatively attached to a shield wall 105 and a drywell floor 115 in a position surrounding DCVs 160. The trash racks 110 at the drywell inlets 130 may act as a filter for blocking debris from entering the DCVs 160, which lead to a suppression pool 140 through a plurality of horizontal vents 170. The suppression pool 140 may include a given amount of water 150. The water 150 may flow out of the DCVs 160 through the horizontal vents 170 and into the suppression pool 140, eventually rising to a given level.

The trash racks 110 function as a deterrent to debris clogging the drywell inlets 130. However, the limited surface area of conventional trash racks may lead to a reduced fluid (i.e., a steam or a liquid) flow through the DCVs 160 when the trash racks 110 become clogged with debris.

Exemplary embodiments of the present invention are trash racks according to any one of claims 1-6.

The exemplary embodiments of the present invention will become more fully understood from the detailed description given herein below with reference to the accompanying drawings which are given by way of illustration only, wherein like reference numerals designate corresponding parts in the various drawings, and in which:
Figure 1A illustrates a top view of a conventional trash rack arrangement in a boiling water reactor (BWR).
Figure 1B illustrates a perspective view of the conventional trash rack arrangement of Figure 1A.
Figure 2A is a top view of a trash rack arrangement in accordance with an exemplary embodiment of the present invention.
Figure 2B is an exploded, perspective view illustrating the orientation of the trash rack arrangement of Figure 2A attached to a shield wall and a drywell floor with drywell connecting vents (DCVs).
Figure 3A is a top view of a trash rack arrangement in accordance with another exemplary embodiment of the present invention.
Figure 3B is an exploded, perspective view illustrating the orientation of the trash rack arrangement of Figure 3A formed on a shield wall with DCVs.

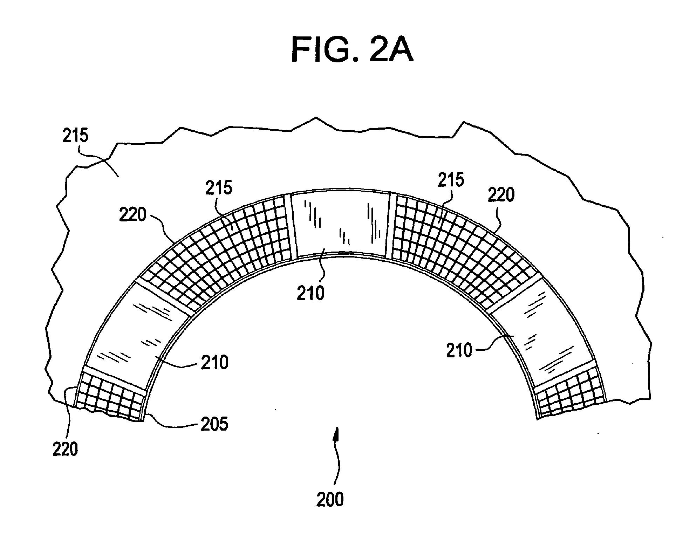

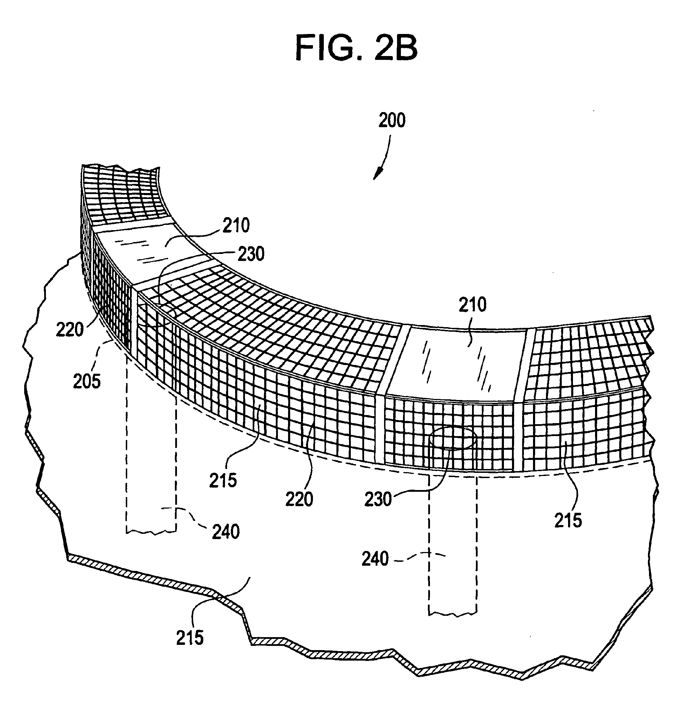

Figure 2A is a top view of a trash rack arrangement 200 in accordance with an exemplary embodiment of the present invention. Figure 2B is an exploded, perspective view illustrating the orientation of the trash rack arrangement 200 of Figure 2A attached to a shield wall 205 and a drywell floor 215 with drywell connecting vents (DCVs) 240.

The trash rack arrangement 200 includes a continuous cage 220 attached to the shield wall 205 and the drywell floor 215. The trash rack arrangement 200 may further include solid plates 210, the solid plates 210 being arranged in a position above the DCVs 240 in place of or mounted on the continuous cage 220. The solid plates 210 may serve as a protective device from debris impacting the trash track arrangement 200 at high velocities. An exemplary solid plate may be composed of a metal.

In the present invention, the continuous cage 220 allows fluid flow through the trash rack arrangement 200. Thus, as debris impacts and clogs at least some of the gaps of the continuous cage 220, there may exist additional surface area on the continuous cage 220 at which to allow fluid flow (steam or liquid) through the remaining unclogged gaps. Such debris may include insulation from a broken pipe, for example. However, the debris could be composed of other materials as well.

In another exemplary embodiment of the present invention, for example in a Lungmen design, a pipe rupture in the BWR may cause debris to travel at substantially high velocities and impact with the trash rack arrangement 200. The solid plates 210 may be formed with a given structural integrity so to withstand impact with high-velocity debris without a possibility of rupture. Since the trash rack arrangement 200 is configured to protect the fluid flow through the drywell inlets 230, placing the solid plates 210 in a position over the drywell inlets 230 in place of the continuous cage may deter a potential rupture of the continuous cage 220 from further impacting the drywell inlets 130 after the rupture. It is understood that the solid plates 210 may be placed in any position mounted on continuous cage 220, or in place of the continuous cage 220, in order to provide additional protection against debris impact, and is not limited to being placed or mounted over the drywell inlets 230.

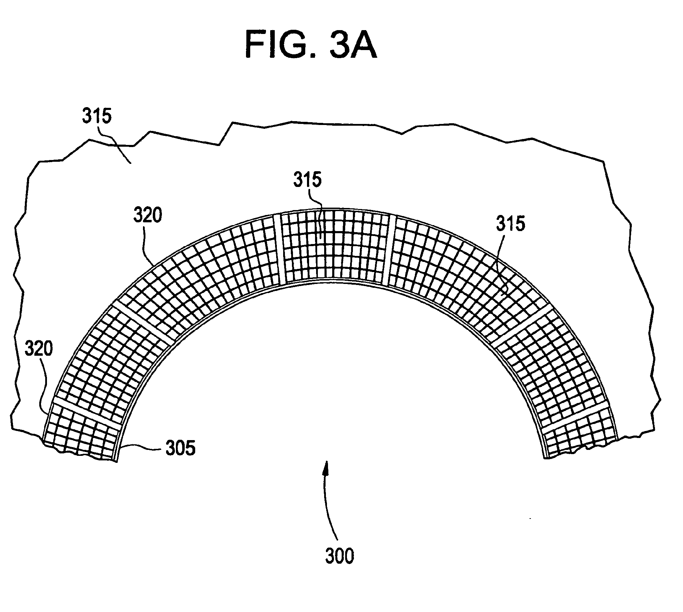

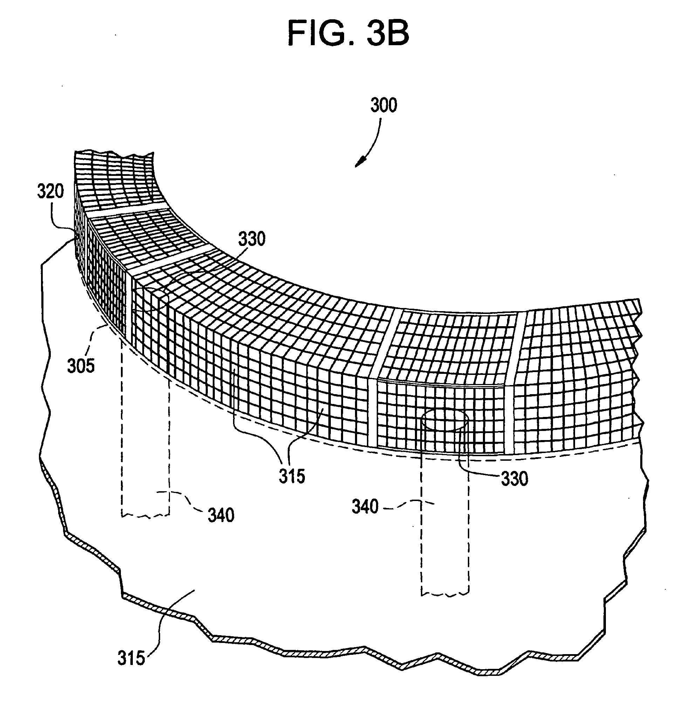

Figure 3A is a top view of a trash rack arrangement 300 in accordance with another exemplary embodiment of the present invention. Figure 3B is an exploded, perspective view illustrating the orientation of the trash rack arrangement 300 of Figure 3A attached to a shield wall 305 and a drywell floor 315 with DCVs 340.

The trash rack arrangement 300 includes a continuous cage 320 mounted over a shield wall 305. Referring to Figures 3A and 3B, in contrast to the embodiment as illustrated in Figures 2A and 2B, the trash rack arrangement 300 may not include solid plates. Instead, the continuous cage 320 may be uniform with a grid structure throughout the periphery of the trash rack arrangement 300 around the shield wall 305. Referring to Figures 2A and 2B, the grid structure of the continuous cage 320 includes gaps (i.e., spaces through which fluid may flow through the continuous cage 320). By having a continuous cage 320 without solid plates, there may be more gaps in the continuous cage 320. In other words, more debris may clog the gaps of the trash rack arrangement 300 before there may be a fluid flow reduction.

In another exemplary embodiment of the present invention, a designer may select whether to include solid plates in the design of the continuous cage 220/320 based on design criteria. For example, the designer may select additional space on the continuous cage 220/320 for solid plates 210 so as to block debris of any size from entering the DCVs 240/340. In another example, if debris with the high expected impact momentum are not expected, the designer may select to limit space on the continuous cage 220/320 for the solid plates 210 in order to maximize the number of useable gaps.

In another exemplary embodiment of the present invention, the continuous cage 220/230 may include a metal grid (i.e., a cage) with gaps. The metal grid may include any metal with characteristics suitable for operation in conventional BWRs.

In an example, the cage 220/320 may be formed so that the gaps have a size of 6" x 6" (152 x 152mm), thereby blocking debris in a collision orientation (i.e., a cross-sectional area at a point of impact with the continuous cage 220/320) greater than 6" x 6" (152 x 152mm). The continuous cage 220/320 may be formed to a height of about 1.3 meters. In this example, the height may refer to a distance between the ceiling of the continuous cage 220/320 and the drywell floor 215/315. The continuous cage 220/320 may also have a width of about 1.0 meters. In this example, the width may refer to a distance between the vertical face of the continuous cage 220/320 and the shield wall 205/305.

In another exemplary embodiment of the present invention, the metal grid may be comprised of round bars having a diameter of less than or equal to 3/8" (9.5mm). In a further example of this embodiment, the round bars may be comprised of steel.

The exemplary embodiments of the present invention being thus described, it will be obvious that the same may be varied in many ways. For example, above-described dimensions for the cage are given as examples only. It is understood that different cage dimensions may be used. Further, specific materials given above for various items (i.e., the metal grid, solid plates 210, etc....) included in the trash rack arrangement 200/300 are given as exemplary examples only. It is understood that any material suitable for the environment of a BWR and having the general characteristics of the above-described specific examples may be used in the design of the trash rack arrangement 200/300.

## Claims

1. A trash rack arrangement (200, 300) for blocking debris carried by a fluid into a drywell from entering a suppression pool (140) of a nuclear reactor through vents connected to the drywell, comprising:
a cage (220, 320) operatively attached to a shield wall (205, 305) of the nuclear reactor, the cage embodied by a metal grid structure with gaps for blocking passage of debris at a given size, wherein the cage extends continuously around a periphery of the shield wall of the nuclear reactor.

2. The trash rack arrangement of claim 1, wherein the metal grid structure is comprised of round bars.

3. The trash rack arrangement of claim 2, wherein the round bars are comprised of steel.

4. The trash rack arrangement of claim 1, wherein the cage further includes at least one solid plate (210) in place of a portion of the metal grid, in a position aligned with a drywell connecting vent on the shield wall of the nuclear reactor.

5. The trash rack arrangement of claim 1, wherein the cage further includes at least one solid plate (210) mounted on a portion of the metal grid, in a position aligned with a drywell connecting vent on the shield wall of the nuclear reactor.

6. The trash rack arrangement of claim 4 or 5, wherein the at least one solid plate is comprised of metal.

## Patentansprüche

1. Schmutzrechenanordnung (200, 300), um von einem Fluid in eine Druckkammer transportierten Schmutz am Eintritt in ein Kondensationsbecken (140) eines Kernreaktors durch mit der Druckkammer verbundene Entlüftungsöffnungen zu verhindern, aufweisend:
einen Käfig (220, 320), der funktionell mit einer Schirmwand (205, 305) des Kernreaktors verbunden ist, wobei der Käfig durch eine Metallgitterstruktur mit Spalten zum Blockieren des Durchtrittes von Schmutz einer vorgegebenen Größe verkörpert ist, wobei sich der Käfig zusammenhängend um einen Umfang der Schirmwand des Kernreaktors herum erstreckt.

2. Schmutzrechenanordnung nach Anspruch 1, wobei die Metallgitterstruktur aus runden Stäben besteht.

3. Schmutzrechenanordnung nach Anspruch 2, wobei die runden Stäbe aus Stahl bestehen.

4. Schmutzrechenanordnung nach Anspruch 1, wobei der Käfig ferner anstelle eines Abschnittes des Metallgitters in einer Position wenigstens eine feste Platte (210) enthält, die zu einer Druckkammer-Verbindungsentlüftungsöffnung auf der Schirmwand des Kernreaktors ausgerichtet ist.

5. Schmutzrechenanordnung nach Anspruch 1, wobei der Käfig ferner wenigstens eine feste Platte (210) enthält, die auf einem Abschnitt des Metallgitters in einer Position befestigt ist, die zu einer Druckkammer-Verbindungsentlüftungsöffnung auf der Schirmwand des Kernreaktors ausgerichtet ist.

6. Schmutzrechenanordnung nach Anspruch 4 oder 5, wobei die wenigstens eine feste Platte aus Metall besteht.

## Revendications

1. Dispositif de retenue de débris (200, 300) pour empêcher des débris transportés dans une fosse sèche par un fluide d'entrer dans une piscine de suppression (140) d'un réacteur nucléaire à travers des conduites d'échappement raccordées à la fosse sèche, comprenant :
une cage (220, 320) fixée fonctionnellement à une paroi de protection (205, 305) du réacteur nucléaire, la cage étant constituée d'une structure de grille métallique avec des ouvertures destinées à empêcher le passage de débris d'une taille donnée, sachant que la cage s'étend de manière continue autour d'une périphérie de la paroi de protection du réacteur nucléaire.

2. Dispositif de retenue de débris selon la revendication 1, dans lequel la structure de grille métallique est constituée de barres rondes.

3. Dispositif de retenue de débris selon la revendication 2, dans lequel les barres rondes sont constituées d'acier.

4. Dispositif de retenue de débris selon la revendication 1, dans lequel la cage comprend en outre au moins une plaque pleine (210) à la place d'une partie de la grille métallique, dans une position alignée avec une conduite de raccordement de fosse sèche sur la paroi de protection du réacteur nucléaire.

5. Dispositif de retenue de débris selon la revendication 1, dans lequel la cage comprend en outre au moins une plaque pleine (210) montée sur une partie de la grille métallique, dans une position alignée avec une conduite de raccordement sur la paroi de protection du réacteur nucléaire.

6. Dispositif de retenue de débris selon la revendication 4 ou 5, dans lequel la plaque pleine, au nombre d'au moins une, est constituée de métal.
